# EUROPÄISCHE PATENTSCHRIFT

(11) **EP 2 877 723 B1**
(45) Veröffentlichungstag und Bekanntmachung des Hinweises auf die Patenterteilung: **27.06.2018**
(21) Anmeldenummer: 13740268.1
(22) Anmeldetag: 22.07.2013
(51) Int. Cl.: F02B 29/04, F02M 35/04, F02M 35/024

(54) **FRISCHLUFTVERSORGUNGSEINRICHTUNG**
FRESH AIR SUPPLY DEVICE
DISPOSITIF D'APPORT D'AIR FRAIS

(30) Priorität: 26.07.2012 DE 102012213164
(43) Veröffentlichungstag der Anmeldung: 03.06.2015
(73) Patentinhaber: Mahle International GmbH, 70376 Stuttgart (DE)
(72) Erfinder: BAUER, Swen-Juri, 70374 Stuttgart (DE); GRÜNER, Andreas, 73110 Hattenhofen (DE); GRASS, Uwe, 70569 Stuttgart (DE)
(74) Vertreter: BRP Renaud & Partner mbB Rechtsanwälte Patentanwälte Steuerberater
(86) Internationale Anmeldenummer: PCT/EP2013/065425
(87) Internationale Veröffentlichungsnummer: WO 2014/016253

(56) Entgegenhaltungen:
- DE-A1- 2 738 293
- DE-A1- 19 604 738
- DE-A1-102007 030 464
- FR-A1- 2 645 209
- JP-A- S6 138 121
- US-A- 5 871 001
- US-A1- 2005 139 198

## Beschreibung

Die vorliegende Erfindung betrifft eine Frischluftversorgungseinrichtung für eine Brennkraftmaschine, insbesondere eines Kraftfahrzeugs, mit den Merkmalen des Oberbegriffs des Anspruchs 1.

Eine Frischluftversorgungseinrichtung, die eine aufgeladene Brennkraftmaschine mit Frischluft versorgt, umfasst üblicherweise ein Filterelement, das in einem Filterraum angeordnet ist, und einen Ladeluftkühler, der in einem Kühlerraum angeordnet ist. Zum Aufladen der Frischluft umfasst die Brennkraftmaschine beispielsweise einen Kompressor oder einen Abgasturbolader, der einen mit einer Frischluftanlage der Brennkraftmaschine gekoppelten Verdichter sowie eine mit dem Verdichter antriebsverbundene Turbine aufweist, die in eine Abgasanlage der Brennkraftmaschine eingebunden ist.

Aus der DE 196 04 738 A1 ist eine Frischluftversorgungseinrichtung bekannt, die in einem gemeinsamen Gehäuse den Filterraum zum Aufnehmen des Filterelements und den Kühlerraum zum Aufnehmen des Ladeluftkühlers enthält. Dabei ist das Gehäuse so aufgebaut, dass ein dem Gehäuse zugeführter Luftstrom im Gehäuse in zwei Teilströme aufgeteilt wird. Der eine Teilstrom durchströmt das Filterelement, während der andere Teilstrom den Ladeluftkühler zum Kühlen der Ladeluft durchströmt. Hierzu wird der eine Teilstrom, nachdem er das Filterelement durchströmt hat, aus dem Gehäuse herausgeführt und einem Verdichter eines Abgasturboladers zugeführt. Vom Verdichter gelangt die aufgeladene Frischluft, also die Ladeluft in das Gehäuse zurück und durchströmt den Ladeluftkühler, von dem aus dann die gekühlte Ladeluft weiter zu Brennräumen der Brennkraftmaschine geführt wird. Die Effizienz einer derartigen Frischluftversorgungseinrichtung hinsichtlich der erzielbaren Kühlleistung ist vergleichsweise gering, falls eine kompakte Bauweise angestrebt ist.

Aus der DE 27 38 293 A1 ist eine weitere Frischluftversorgungseinrichtung für eine aufgeladene Brennkraftmaschine bekannt, bei der in einem gemeinsamen Gehäuse das Filterelement und stromab davon der Ladeluftkühler in einem gemeinsamen Innenraum des Gehäuses angeordnet sind. Die Luftreinigung erfolgt bei dieser Frischluftversorgungseinrichtung somit nach der Aufladung.

Eine gattungsgemäße Frischluftanlage ist aus der US 5 871 001 bekannt. Weitere ähnliche Frischluftanlagen sind aus der DE 196 94 738 A1 und der JP S61 038121 A1 bekannt.

Ladeluftkühler, die als Einschubkühler konfiguriert sind, gehen aus der DE 10 2007 030 464 A1 und der FR 2 645 209 A1 hervor. Weitere Frischluftanlagen mit Ladeluftkühler sind aus der US 2005/0139198 A1 und der DE 27 38 293 A1 bekannt.

Die vorliegende Erfindung beschäftigt sich mit dem Problem, für eine derartige Frischluftversorgungseinrichtung eine verbesserte Ausführungsform anzugeben, die sich insbesondere durch eine preiswerte Herstellbarkeit auszeichnet. Des Weiteren sollen eine kompakte Bauform sowie eine hohe Effizienz realisiert werden.

Dieses Problem wird bei der vorliegenden Erfindung insbesondere durch den Gegenstand des unabhängigen Anspruchs gelöst. Vorteilhafte Ausführungsformen sind Gegenstand der abhängigen Ansprüche.

Die vorliegende Erfindung beruht auf dem allgemeinen Gedanken, zur Unterbringung des Ladeluftkühlers und des Filterelements ein einstückiges Gehäuse vorzusehen, das den Filterraum und den Kühlerraum integral aufweist. Mit anderen Worten, am gemeinsamen Gehäuse sind der Filterraum und der Kühlerraum als separate Räume integral ausgeformt. Durch ein derartiges einstückiges Gehäuse ergeben sich ein besonders einfacher Aufbau sowie eine besonders preiswerte Herstellbarkeit für die Frischluftversorgungseinrichtung.

Des Weiteren schlägt die Erfindung vor, den Ladeluftkühler mit einem Kühlmitteleinlass, mit einem Kühlmittelauslass und mit einem den Kühlmitteleinlass mit dem Kühlmittelauslass verbindenden internen Kühlmittelpfad auszustatten, der mit einem im Gehäuse verlaufenden und durch den Kühlerraum hindurchgeführten Ladeluftpfad wärmeübertragend gekoppelt ist. Durch den integrierten bzw. internen Kühlmittelpfad lässt sich der Ladeluftkühler insbesondere mit einem flüssigen Kühlmittel betreiben, wodurch eine besonders intensive Ladeluftkühlung bei geringem Bauraum realisierbar ist. Ein derartiger kompakt bauender Ladeluftkühler lässt sich besonders einfach in dem vorgeschlagenen gemeinsamen und einstückigen Gehäuse unterbringen, was die Herstellung des Gehäuses als einstückiges Bauteil erheblich vereinfacht.

Gemäß einer bevorzugten Ausführungsform kann der Ladeluftkühler als in den Kühlerraum einsetzbares, insbesondere einschiebbares, Bauteil ausgebildet sein. Dies gestattet eine einfache Montage des Ladeluftkühlers im Gehäuse; zu Wartungs- oder Reparaturzwecken lässt sich der Ladeluftkühler entsprechend einfach wieder aus dem Gehäuse der Frischluftversorgungseinrichtung entnehmen.

Entsprechend einer vorteilhaften Weiterbildung kann der Ladeluftkühler einen Abdeckkörper aufweisen, der den Kühlmitteleinlass und den Kühlmittelauslass aufweist und der eine am Gehäuse vorgesehene Kühlerraumöffnung verschließt, durch die der Ladeluftkühler in den Kühlerraum eingesetzt ist. Hierdurch erhält ein Bauteil des Ladeluftkühlers, nämlich der Abdeckkörper, eine mehrfache Funktionalität. Zum einen bildet er ein Strukturbauteil des Ladeluftkühlers, das eine gewisse Tragfunktion besitzt. Zum anderen bildet der Abdeckkörper einen Deckel oder Verschluss für die Kühlerraumöffnung des Gehäuses. Gleichzeitig wird dadurch das Anschließen des Ladeluftkühlers an einen Kühlkreis erheblich vereinfacht, da der Kühlmitteleinlass und der Kühlmittelauslass an diesem Abdeckkörper ausgebildet sind, so dass kein separater Durchbruch durch eine Gehäusewand vorgesehen und abgedichtet werden muss.

Das Gehäuse weist gemäß einer vorteilhaften Ausführungsform einen Frischlufteinlass für ungefilterte und nicht komprimierte Frischluft auf, durch die Luft aus der Umgebung in das Gehäuse eintreten kann. Des Weiteren ist das Gehäuse zweckmäßig mit einem Ladeluftauslass ausgestattet, durch den gefilterte, aufgeladene und gekühlte Ladeluft aus dem Gehäuse austreten und Brennräumen der Brennkraftmaschine zugeführt werden kann. Entsprechend einer anderen vorteilhaften Ausführungsform ist eine Drosseleinrichtung vorgesehen, deren Drosselorgan in einem Drosselraum angeordnet ist, der integral im bzw. am Gehäuse ausgeformt ist. Hierdurch wird die Funktionsdichte des Gehäuses vergrößert, was die Produktionskosten senkt.

Gemäß einer vorteilhaften Weiterbildung kann die Drosseleinrichtung eine vormontierbare Einheit sein, die an das Gehäuse so angebaut ist, dass das Drosselorgan in den Drosselraum eingesetzt ist. Diese Bauweise vereinfacht die Montage der Frischluftversorgungseinrichtung, da lediglich die vormontierte Drosseleinrichtung eingesetzt bzw. angebaut werden muss. Erfindungsgemäss weist die Drosseleinrichtung einen Verschlussabschnitt auf, der eine am Gehäuse vorgesehene Drosselraumöffnung verschließt, durch die das Drosselorgan in den Drosselraum eingesetzt ist. Somit wird die Funktionsdichte der Drosseleinrichtung erhöht. Gleichzeitig vereinfacht sich der Zusammenbau der Frischluftversorgungseinrichtung, da durch das Anbauen der Drosseleinrichtung gleichzeitig die für das Einbringen des Drosselorgans vorhandene Drosselraumöffnung verschlossen werden kann.

Besonders vorteilhaft ist dabei eine Ausführungsform, bei welcher der Verschlussabschnitt der Drosseleinrichtung mit dem Gehäuse verclipst werden kann. Hierdurch entfallen zusätzliche separate Befestigungselemente. Entsprechend einer weiteren vorteilhaften Ausführungsform ist kumulativ zur Drosseleinrichtung ein Luftmassensensor vorgesehen, dessen Sensorik in einem Sensorraum angeordnet ist, der integral im bzw. am Gehäuse ausgeformt ist. Durch diese Maßnahme wird die Funktionsdichte des Gehäuses erhöht, was insgesamt die Herstellungskosten reduziert. Der Sensorraum mündet zweckmäßig in eine Reinseite des Filterraums, ist also stromab des Filterelements im Frischluftpfad angeordnet. Gemäß einer vorteilhaften Weiterbildung kann der Luftmassensensor eine vormontierbare Einheit sein, die an das Gehäuse so angebaut ist, dass die Sensorik in den Sensorraum eingesetzt ist. Auch hier wird mit Hilfe einer vormontierbaren Einheit die Montage der Luftversorgungseinrichtung vereinfacht und dadurch preiswerter gestaltet. Der Luftmassensensor kann zusätzlich eine Strömungsführungsfunktion erfüllen, z.B. eine Strömungsumlenkung bewirken. Hierzu kann eine entsprechende Führungskontur bzw. Umlenkkontur im Luftmassensensor vorgesehen sein, um diese Führung bzw. Umlenkung der Strömung mit möglichst geringem Strömungswiderstand zu realisieren. Eine derartige Kontur lässt sich im Gehäuse selbst nicht oder nur mit deutlich erhöhtem Aufwand realisieren, so dass die Verlagerung dieser Führungs- bzw. Umlenkfunktion in den Sensor zu einer Vereinfachung führt. Erfindungsgemäss weist der Luftmassensensor einen Verschlussabschnitt auf, der eine am Gehäuse vorgesehene Sensorraumöffnung verschließt, durch die die Sensorik in den Sensorraum eingesetzt ist. Auch hier wird die Funktionsdichte des Luftmassensensors erhöht, derart, dass gleichzeitig der Montageaufwand reduziert wird, da mit dem Montieren des Luftmassensensors am Gehäuse gleichzeitig die für das Einsetzen der Sensorik vorhandene Sensorraumöffnung verschlossen werden kann.

Bei einer anderen vorteilhaften Weiterbildung kann vorgesehen sein, dass der Verschlussabschnitt mit dem Gehäuse verclipst ist. Durch den Entfall separater Befestigungselemente vereinfacht sich die Montage.

Die Brennkraftmaschine kann zum Aufladen der Frischluft mit einem Abgasturbolader ausgestattet sein, dessen Verdichter in eine Frischluftanlage der Brennkraftmaschine eingebaut ist und dessen Turbine in eine Abgasanlage der Brennkraftmaschine eingebaut ist. Die hier vorgestellte Frischluftversorgungseinrichtung bildet zumindest einen Bestandteil dieser Frischluftanlage. Insbesondere ist die Frischluftanlage der Brennkraftmaschine durch die hier vorgestellte Frischluftversorgungseinrichtung gebildet. Dementsprechend kann der Verdichter des Abgasturboladers auch einen Bestandteil der Frischluftversorgungseinrichtung bilden. Da der Verdichter in den Abgasturbolader integriert ist, kann auch der Abgasturbolader mit seiner Turbine einen Bestandteil der Frischluftversorgungseinrichtung bilden. Zweckmäßig ist der Frischluftpfad innerhalb der Frischluftversorgungseinrichtung so geführt, dass dem Verdichter gefilterte Frischluft zugeführt wird, so dass der Verdichter im Frischluftpfad zwischen dem Filterelement und dem Ladeluftkühler angeordnet ist.

Gemäß einer vorteilhaften Ausführungsform kann integral am Gehäuse ein Einlassstutzen ausgeformt sein, an den der Verdichter auslassseitig angeschlossen ist oder anschließbar ist. Zusätzlich oder alternativ kann integral am Gehäuse ein Auslassstutzen ausgeformt sein, der an den Verdichter einlassseitig angeschlossen oder anschließbar ist. Dieser Auslassstutzen kann dabei eintrittsseitig unmittelbar in den zuvor genannten Sensorraum einmünden, so dass die Frischluft nach dem Filterelement zunächst durch den Sensorraum strömt und danach zum Verdichter gelangt.

Wie vorstehend erwähnt kann der Ladeluftkühler gemäß einer vorteilhaften Ausführungsform einen Abdeckkörper aufweisen, der die Kühlerraumöffnung verschließt. Dieser Abdeckkörper kann in einem einfachen Fall als Abdeckplatte ausgestaltet sein, die insbesondere aus einem Vollmaterial bestehen kann. Bei einer alternativen Ausführungsform kann der Abdeckkörper als Verteiler- und Sammelkasten ausgestaltet sein. Der Abdeckkörper ist dann ein Hohlkörper bzw. ein Gehäuse für die Kühlmittelführung. In beiden Fällen ist vorgesehen, dass der Kühlmitteleinlass und der Kühlmittelauslass an diesem Abdeckkörper angeordnet bzw. ausgebildet sind.

Entsprechend einer vorteilhaften Ausführungsform kann der Ladeluftkühler eine Vielzahl von Platten aufweisen, die in einer Stapelrichtung aufeinander gestapelt sind und die in der Stapelrichtung zueinander beabstandet sind, wobei Zwischenräume zwischen in der Stapelrichtung benachbarten Platten entstehen, die einen Teil des Ladeluftpfads bilden. Mit anderen Worten, durch den hier vorgeschlagenen Aufbau des Ladeluftkühlers kann der Ladeluftpfad durch die Zwischenräume der Platten durch den Ladeluftkühler hindurchgeführt werden. Da diese Platten mit dem Kühlmittelpfad wärmeübertragend gekoppelt sind, kann über die Platten eine großflächige Kontaktierung mit der Ladeluft realisiert werden, was einen möglichst großen Wärmeübergang ermöglicht.

Gemäß einer vorteilhaften Weiterbildung kann der Ladeluftkühler mehrere U-förmige Rohre aufweisen, deren geradlinige Abschnitte durch Durchbrüche der Platten hindurchgesteckt sind, die in der Stapelrichtung zueinander fluchten, während Bogenstücke der Rohre, die je zwei geradlinige Abschnitte miteinander verbinden, außerhalb des Stapels verlaufen. Hierdurch ergibt sich ein besonders einfach realisierbarer Aufbau für den Ladeluftkühler. Insbesondere muss lediglich ein Stapel aus besagten Platten hergestellt werden, in dessen zueinander fluchtende Durchbrüche die U-Rohre eingesteckt werden. Die offenen Enden der U-Rohre können mit einer Verteilerkammer des Abdeckkörpers bzw. mit einer Sammelkammer des Abdeckkörpers kommunizieren.

Bei einer vorteilhaften Weiterbildung können die Platten bezüglich der Rohre lose angeordnet sein. Insbesondere wird hiermit auf ein Verlöten der Rohre mit den Platten verzichtet, wodurch die Herstellung des Ladeluftkühlers besonders preiswert realisierbar ist. Zweckmäßig ist zwischen den Platten und den Rohren in den jeweiligen Durchbrüchen ein Schiebesitz ausgebildet, der insbesondere ein kleines Spiel oder sogar einen Presssitz aufweisen kann.

Bei einer anderen vorteilhaften Weiterbildung können die geraden Abschnitte der Rohre durch Öffnungen einer Halteplatte hindurchgesteckt sein, die in der Stapelrichtung an den Stapel angrenzt und die mit einem Elastomer beschichtet ist. Diese Halteplatte kann im montierten Zustand den Abdeckkörper oder zumindest einen Bestandteil des Abdeckkörpers bilden, der im eingebauten Zustand die Kühlerraumöffnung verschließt.

Bei einer anderen vorteilhaften Weiterbildung kann nun vorgesehen sein, die Halteplatte mit einer Gehäusedichtung zu versehen, die einen als Verteiler- und Sammelkasten ausgestalteten Abschnitt des Abdeckkörpers des Ladeluftkühlers gegenüber dem Gehäuse abdichtet, wobei der Abdeckkörper bzw. besagter Abschnitt den Kühlmitteleinlass und den Kühlmittelauslass aufweist. Insbesondere kommuniziert der Kühlmitteleinlass mit einem Verteilerraum des Verteiler- und Sammelkastens, während der Kühlmittelauslass mit einem Sammelraum des Verteiler- und Sammelkastens kommuniziert. Insbesondere verschließt die Halteplatte den Verteiler- und Sammelkasten im Bereich der Kühlerraumöffnung des Gehäuses. Die Gehäusedichtung ist bevorzugt aus einem Kunststoff hergestellt. Sie kann insbesondere durch einen integralen Bestandteil der Elastomerbeschichtung der Halteplatte gebildet sein.

Gemäß einer vorteilhaften Weiterbildung kann die Halteplatte für jede ihrer Öffnungen eine Rohrdichtung aufweisen, die den jeweiligen durchgesteckten Abschnitt des jeweiligen Rohrs gegenüber der Halteplatte abdichtet. Hierdurch kann eine hinreichend dichte Führung für das Kühlmittel innerhalb des Ladeluftkühlers realisiert werden auch für den Fall, dass keine Lötverbindung zwischen der Halteplatte und den Rohren vorgesehen wird. Die Rohrdichtungen sind bevorzugt aus einem geeigneten Kunststoff hergestellt. Sie können insbesondere durch integrale Bestandteile der Elastomerbeschichtung der Halteplatte gebildet sein.

Gemäß einer anderen Ausführungsform kann vorgesehen sein, dass die Abschnitte der Rohre ausschließlich im Bereich der Halteplatten nachträglich mechanisch aufgeweitet sind. Mit Hilfe einer derartigen mechanischen Aufweitung lassen sich die Rohre an der Halteplatte fixieren. Gleichzeitig kann ein Radialspalt zwischen den Rohren und der Halteplatte innerhalb der jeweiligen Öffnung reduziert bzw. beseitigt werden. Sofern außerdem eine Rohrdichtung vorgesehen ist, kann durch die nachträgliche Aufweitung eine vorgespannte radiale Anlage, insbesondere eine radiale Verpressung zwischen dem jeweiligen Rohr und der zugehörigen Rohrdichtung realisiert werden.

Bei einer anderen vorteilhaften Ausführungsform kann das Gehäuse für jeden Bogenabschnitt eine separate Aufnahmetasche aufweisen, in die der jeweilige Bogenabschnitt hineinragt. Durch diese Bauform ergibt sich für den Ladeluftkühler im Gehäuse an einer der Kühlerraumöffnung gegenüberliegenden Seite eine Positionierung bzw. Lagefixierung. Gleichzeitig ergibt sich für die Montage eine Führungswirkung, wodurch das Einsetzen des Ladeluftkühlers in das Gehäuse erleichtert wird.

Entsprechend einer anderen vorteilhaften Ausführungsform kann der Abdeckkörper des Ladeluftkühlers mit dem Gehäuse verclipst sein. Durch diese Maßnahme entfallen separate Befestigungselemente, was die Montage vereinfacht.

Bei einer anderen Ausführungsform kann vorgesehen sein, dass das Filterelement wenigstens ein Positionierelement aufweist, das mit einer am Gehäuse im Filterraum angeordneten Positionierkontur zum Positionieren und/oder Halten des Filterelements in einer vorbestimmten Relativlage zum Gehäuse zusammenwirkt. Hierdurch kann eine Fehlmontage vermieden werden. Insbesondere kann bei ringförmigen Filterelementen, deren Filterkörper aus einem gefalteten bahnförmigen Filtermaterial besteht, eine erhöhte Zuverlässigkeit für die Luftmassenmessung erreicht werden, indem ein Verbindungsbereich des Filterkörpers, in dem Endfalten des gefalteten Filtermaterials aneinander befestigt sind, stets in derselben Relativlage bezüglich des jeweiligen Positionierelements angeordnet werden, wodurch sich stromab des Filterelements stets die gleichen Strömungsverhältnisse einstellen. Da ein Luftmassensensor üblicherweise stromab des Filterelements und vorzugsweise proximal dazu angeordnet ist, ergeben sich dort ebenfalls keine Veränderung der Strömungsverhältnisse, so dass die Messungen des Luftmassensensors auch bei einem Filterelementwechsel im Wesentlichen eine gleichbleibende Güte bzw. Qualität aufweisen. Insbesondere kann durch diese Maßnahme auf eine Nachjustierung des Luftmassensensors verzichtet werden, die an sich bei einem Filterelementwechsel erforderlich wäre, wenn der Luftmassensensor weiterhin zuverlässige Messwerte liefern soll.

Gemäß einer bevorzugten Weiterbildung kann das Filterelement also einen ringförmigen Filterkörper sowie zwei Endscheiben aufweisen, die an axialen Stirnseiten des Filterkörpers angeordnet sind, wobei das jeweilige Positionierelement an einer solchen Endscheibe angeordnet ist. Insbesondere kann an jeder Endscheibe ein solches Positionierelement vorgesehen sein. Durch die Anbringung an der Endscheibe lässt sich die Herstellung besonders preiswert realisieren. Insbesondere können die Positionierelemente integral an den Endscheiben ausgeformt werden.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine schaltplanartige Prinzipdarstellung einer Brennkraftmaschine,
- Fig. 2: eine isometrische Ansicht einer Brennkraftmaschine mit Frischluftanlage und Abgasanlage,
- Fig. 3: eine auseinander gezogene Darstellung einer Frischluftversorgungseinrichtung,
- Fig. 4: eine auseinander gezogene Darstellung eines Ladeluftkühlers,
- Fig. 5: ein Längsschnitt des Ladeluftkühlers,
- Fig. 6: eine vergrößerte Detailansicht VI aus Fig. 5,
- Fig. 7: eine vergrößerte Detailansicht VII aus Fig. 5,
- Fig. 8-11: Seitenansichten des Ladeluftkühlers bei unterschiedlichen Ausgestaltungen,
- Fig. 12: eine vergrößerte Ansicht eines Details XII in Fig. 5 in eingebautem Zustand,
- Fig. 13: eine isometrische Ansicht der Frischluftversorgungseinrichtung im Bereich eines montierten Luftmassensensors,
- Fig. 14: eine isometrische Ansicht des Luftmassensensors,
- Fig. 15: eine isometrische Ansicht der Frischluftversorgungseinrichtung im Bereich des Ladeluftkühlers bei aufgeschnittenem Gehäuse und angeschnittenem Ladeluftkühler,
- Fig. 16: eine auseinander gezogene, isometrische Ansicht der Frischluftversorgungseinrichtung im Bereich einer Drosseleinrichtung,
- Fig. 17: eine Ansicht wie in Fig. 16 bei montierter Drosseleinrichtung.

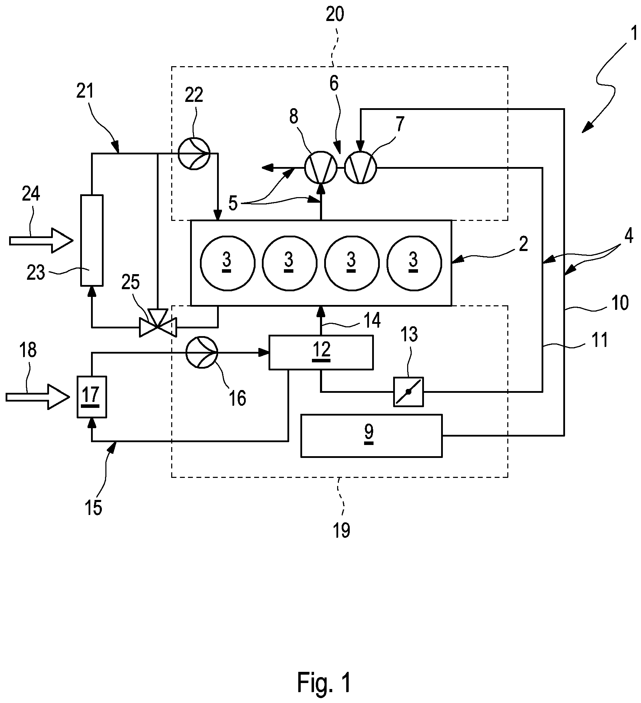

Entsprechend Figur 1 umfasst eine Brennkraftmaschine 1, die bevorzugt in einem Kraftfahrzeug zur Anwendung kommt, einen Motorblock 2, der in nicht näher bezeichneten Zylindern Brennräume 3 enthält. Die Brennkraftmaschine 1 umfasst eine Frischluftanlage 4 zur Versorgung der Brennräume 3 mit Frischluft. Ferner ist die Brennkraftmaschine 1 mit einer Abgasanlage 5 zum Abführen von Abgas von den Brennräumen 3 ausgestattet. Die Brennkraftmaschine 1 ist aufgeladen und besitzt hierzu einen Abgasturbolader 6, der in herkömmlicher Weise einen Verdichter 7 und eine Turbine 8 aufweist. Der Verdichter 7 ist in die Frischluftanlage 4 eingebunden. Die Turbine 8 treibt den Verdichter 7 an und ist in die Abgasanlage 5 eingebunden.

Die Frischluftanlage 4 umfasst eine Luftfiltereinrichtung 9, die über eine erste Verbindung 10 mit einem Einlass des Verdichters 7 verbunden ist, so dass gefilterte Frischluft mit Umgebungstemperatur zum Verdichter 7 gelangt. Eine zweite Verbindung 11 verbindet eine Auslassseite des Verdichters 7 mit einem Ladeluftkühler 12, wodurch heiße Ladeluft zum Ladeluftkühler 12 gelangt. In der zweiten Verbindung 11 kann eine Drosseleinrichtung 13 angeordnet sein. Eine dritte Verbindung 14 verbindet den Ladeluftkühler 12 mit dem Motorblock 2, so dass gekühlte Ladeluft zu den Brennräumen 3 gelangt.

Der Ladeluftkühler 12 ist in einen Ladeluftkühlkreis 15 eingebunden, der eine Kühlmittelpumpe 16 und einen Kühler 17 aufweist, der mit einem Luftstrom 18 beaufschlagbar ist. Dieser Luftstrom 18 kann bei einer Fahrzeuganwendung durch den Fahrtwind oder durch ein hier nicht gezeigtes Gebläse erzeugt bzw. verstärkt werden. In Figur 1 deutet ein Rechteckrahmen 19 eine Kaltseite der Brennkraftmaschine 1 hinsichtlich der Gasversorgung an. Ein Rechteckrahmen 20 deutet eine Heißseite der Brennkraftmaschine 1 hinsichtlich der Gasentsorgung an. Während sich auf der Kaltseite 19 insbesondere die Luftfiltereinrichtung 9, die Drosseleinrichtung 13 und der Ladeluftkühler 12 befinden, sind auf der Heißseite 20 insbesondere der Verdichter 7, die Turbine 8 und vorzugsweise die gesamte Abgasanlage 5 angeordnet.

Zur Kühlung des Motorblocks 2 ist außerdem ein Motorkühlkreis 21 vorgesehen, der eine Kühlmittelpumpe 22 und einen Kühler 23 enthält. Auch dieser Kühler 23 kann mit einem Luftstrom 24 beaufschlagt werden, der durch den Fahrtwind gebildet und durch ein nicht gezeigtes Gebläse verstärkt werden kann. Ein Thermostatventil 25 ermöglicht ein Umschalten zwischen einem Warmlaufbetrieb unter Umgehung des Kühlers 23 und einem den Kühler 23 einbindenden Kühlbetrieb. Erkennbar sind die beiden Kühlkreise 15, 21 separat gestaltet. Sie können insoweit miteinander kombiniert werden, dass beispielsweise die beiden Kühler 17, 23 unmittelbar hintereinander angeordnet sind, um sie mit einem gemeinsamen Luftstrom 18 bzw. 24 beaufschlagen zu können, wodurch insbesondere nur ein gemeinsames Gebläse vorzusehen ist. Durch die Trennung der beiden Kühlkreise 15, 21 ist es insbesondere möglich, die beiden Kühlkreise 15, 21 auf unterschiedlichen Temperaturniveaus zu betreiben. Insbesondere wird der Ladeluftkühlkreis 15 auf einem niedrigeren Temperaturniveau betrieben als der Motorkühlkreis 21.

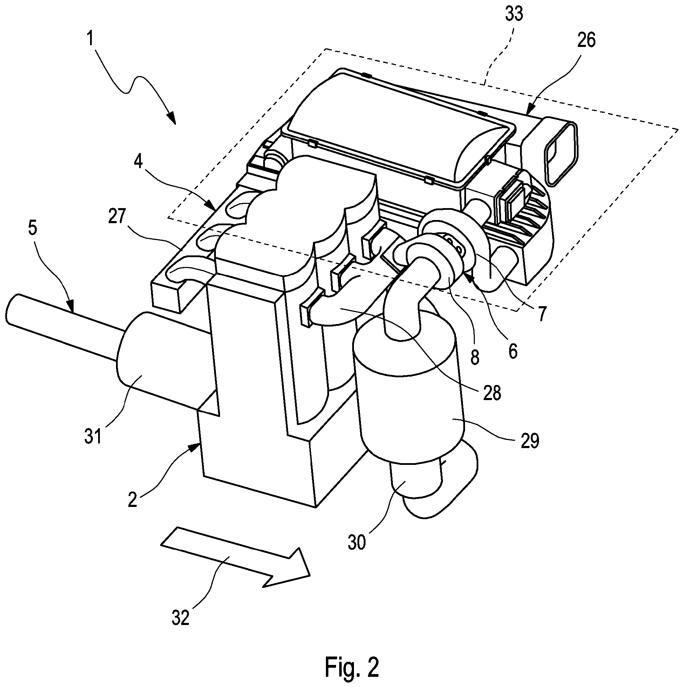

Entsprechend Figur 2 umfasst die Frischluftanlage 4 eine Luftversorgungseinrichtung 26, zu der insbesondere der Abgasturbolader 6 und ein Ladeluftverteiler 27 hinzugerechnet werden können, der beispielsweise die dritte Verbindung 14 repräsentiert. Die Abgasanlage 5 umfasst einen Abgassammler 28, der zur Turbine 8 führt. Stromab des Abgasturboladers 6 kann die Abgasanlage 5 beispielsweise einen Oxidationskatalysator 29, ein Partikelfilter 30 und einen Schalldämpfer 31 enthalten. Auch die Kühlmittelpumpe 16 des Ladeluftkühlkreises 15 kann an die Luftversorgungseinrichtung 26 angebaut sein und dann zum Umfang der Luftversorgungseinrichtung 26 zählen.

In Figur 2 besitzt der Motorblock 2 rein exemplarisch nur drei Zylinder, während in Figur 1 vier Zylinder vorgesehen sind. In Figur 2 deutet ein Pfeil 32 eine Fahrtrichtung des Fahrzeugs an, wodurch eine bevorzugte Einbaulage für die Brennkraftmaschine 1 angedeutet werden soll. Ferner deutet in Figur 2 ein Rechteckrahmen 33 die Baugruppe der Frischluftversorgungseinrichtung 26 an, die nachfolgend näher erläutert wird. Erkennbar ist die Luftversorgungseinrichtung 26 so ausgestaltet, dass sehr kurze Wege zwischen der kalten Seite und der warmen Seite der Brennkraftmaschine 1 verwirklicht werden, so dass auf zusätzliche Kanäle und Schläuche verzichtet werden kann. Die Anordnung des Ladeluftkühlers 12 erfolgt im Gehäuse 34 vorzugsweise so, dass die heiße Ladeluft schon sehr früh, also nach einem sehr kurzen Strömungsweg gekühlt werden kann. Hierdurch wird die heiße Seite des Frischluftpfads vergleichsweise kurz, was die thermische Belastung der Frischluftversorgungseinrichtung 26 und insbesondere die thermische Belastung von in der Luftströmungsrichtung nachfolgenden Bauteilen und Komponenten, wie z.B. die Drosseleinrichtung 46, reduziert.

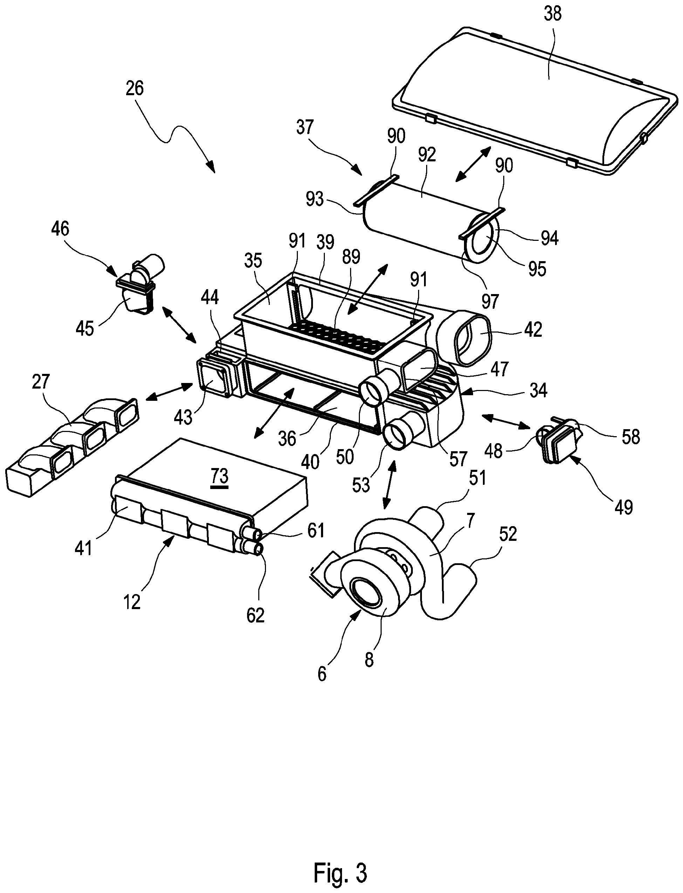

Entsprechend Figur 3 umfasst die Frischluftversorgungseinrichtung 26 ein einstückiges Gehäuse 34, das integral einen Filterraum 35 und einen Kühlerraum 36 enthält, die durch einen Boden 89 voneinander separiert sind. Der Boden 89 ist ebenfalls integraler Bestandteil des Gehäuses 34. Er kann durch Stege versteift sein. Die Frischluftversorgungseinrichtung 26 umfasst außerdem ein Filterelement 37, das in den Filterraum 35 einsetzbar ist. Des Weiteren ist ein Deckel 38 vorgesehen, der eine Filterraumöffnung 39 des Gehäuses 34 verschließen kann. Durch diese Filterraumöffnung 39 ist das Filterelement 37 in den Filterraum 35 einsetzbar. Durch Verschließen der Filterraumöffnung 39 mit dem Deckel 38 ist die in Figur 1 eingeführte Luftfiltereinrichtung 9 verwirklicht, und zwar als integraler Bestandteil der Frischluftversorgungseinrichtung 26. Der Deckel 38 kann insbesondere mit dem Gehäuse 34 verclipst sein, so dass auf separate Befestigungselemente verzichtet werden kann. Durch die Verclipsung ist der Deckel 38 jederzeit lösbar am Gehäuse 34 befestigt.

Bei der in Fig. 3 gezeigten bevorzugten Ausführungsform ist das Filterelement 37 als Ringfilterelement ausgestaltet, so dass es einen ringförmigen Filterkörper 92 und zwei Endscheiben 93, 94 aufweist. Der Filterkörper 92 umschließt einen Innenraum und besteht vorzugsweise aus einem plissierten bzw. gefalteten bahnförmigen Filtermaterial. Die Endscheiben 93, 94 sind an axialen Stirnseiten des Filterkörpers 92 angeordnet. Im Beispiel ist die links in Fig. 3 angeordnete Endscheibe 93 als geschlossene Endscheibe 93 ausgestaltet, während die rechts angeordnete Endscheibe 94 als offene Endscheibe 94 ausgestaltet ist. Die offene Endscheibe 94 enthält eine zentrale Öffnung 95, durch die eine Fluidverbindung mit einem vom Filterkörper 92 umschlossenen Innenraum des Filterelements 37 möglich ist. An der offenen Endscheibe 94 ist außerdem eine axial abstehende Radialdichtung 97 ausgeformt, welche die Öffnung 95 umschließt und im Einbauzustand an einem in die Öffnung 95 hineinragenden Stutzen des Gehäuses 34 radial dichtend anliegt. Grundsätzlich ist auch eine Ausführungsform mit zwei offenen Endscheiben 93, 94 denkbar. Das Filterelement 37 ist außerdem mit wenigstens einem Positionierelement 90 ausgestattet. Im Beispiel sind zwei Positionierelemente 90 vorgesehen. Je ein Positionierelement 90 ist an je einer der Endscheiben 93, 94 angeordnet. Vorzugsweise ist das jeweilige Positionierelement 90 integral an der jeweiligen Endscheibe 93, 94 ausgeformt. Die Positionierelemente 90 wirken beim Einsetzen des Filterelements 37 in den Filterraum 35 mit dazu komplementären Positionskonturen 91 zusammen, um das Filterelement 37 relativ zum Gehäuse 34 in einer vorbestimmten Relativlage zu positionieren. Im Eingebauten Zustand können die Positionierelemente 90 außerdem zum Halten bzw. Fixieren dieser Relativlage zwischen Filterelement 37 und Gehäuse 34 zusammenwirken. Im Beispiel ist das jeweilige Positionierelement 90 als geradliniger Stab ausgestaltet, der sich quer und exzentrisch zur Längsmittelachse des Filterelements 37 erstreckt und an beiden Seiten über die zugehörige Endscheibe 93, 94 vorsteht.

Bei anderen Ausführungsformen kann anstelle des bevorzugten ringförmigen Filterelements 37 auch ein beliebiges anderes Filterelement 37 verwendet werden, das beispielsweise z.B. einen plattenförmigen oder hufeisenförmigen Filterkörper aufweist.

Die Luftversorgungseinrichtung 26 umfasst außerdem den Ladeluftkühler 12, der durch eine Kühlerraumöffnung 40 in den Kühlerraum 36 einsetzbar ist. Hierzu kann der Ladeluftkühler 12 durch die Kühlerraumöffnung 40 in den Kühlerraum 36 eingeschoben werden. Zweckmäßig weist der Ladeluftkühler 12 einen Abdeckkörper 41 auf, der im eingebauten Zustand die Kühlerraumöffnung 40 verschließt.

Das Gehäuse 34 weist außerdem integral einen Frischlufteinlass 42 für ungefilterte Frischluft sowie einen Ladeluftauslass 43 für gekühlte Ladeluft auf. An den Ladeluftauslass 43 ist der Ladeluftverteiler 27 anschließbar.

Das Gehäuse 34 enthält außerdem einen Drosselraum 44, in den ein Drosselorgan 45 einer Drosseleinrichtung 46 einsetzbar ist. Der Drosselraum 44 ist dabei integral am Gehäuse 34 ausgeformt. Der Drosselraum 44 befindet sich außerdem bezüglich eines Frischluftpfads, der durch das Gehäuse 34 führt, zwischen dem Ladeluftkühler 12 und dem Ladeluftauslass 43.

Das Gehäuse 34 enthält außerdem einen Sensorraum 47, in den eine Sensorik 48 eines Luftmassensensors 49 einsetzbar ist. Auch der Sensorraum 47 ist integral am Gehäuse 34 ausgeformt. Er befindet sich im Frischluftpfad zwischen dem Filterraum 35 und einem Auslassstutzen 50, der ebenfalls integral am Gehäuse 34 ausgeformt ist. An diesen Auslassstutzen 50 ist ein Einlass 51 des Verdichters 7 anschließbar. Ein Auslass 52 des Verdichters 7 ist dagegen an einen Einlassstutzen 53 anschließbar, der integral am Gehäuse 34 ausgeformt ist. Der Einlassstutzen 53 ist dabei bezüglich des Frischluftpfads stromauf des Ladeluftkühlers 12 bzw. stromauf des Kühlraums 36 angeordnet.

Um das Gehäuse 34 besonders einfach als einstückiges Spritzgussteil herstellen zu können, sind mehrere Gehäuseöffnungen parallel zueinander orientiert. Beispielsweise sind die Kühlerraumöffnungen 40, der Ladeluftauslass 43, der Auslassstutzen 50 und der Einlassstutzen 53 parallel zueinander orientiert. Ferner sind hier der Frischlufteinlass 42 und eine Sensorraumöffnung 57 parallel zueinander orientiert. Die hier vorgesehenen drei Gruppen, die jeweils zueinander parallele Gehäuseöffnungen enthalten, sind im Beispiel zueinander in drei senkrecht zueinander orientierten Raumrichtungen zueinander ausgerichtet.

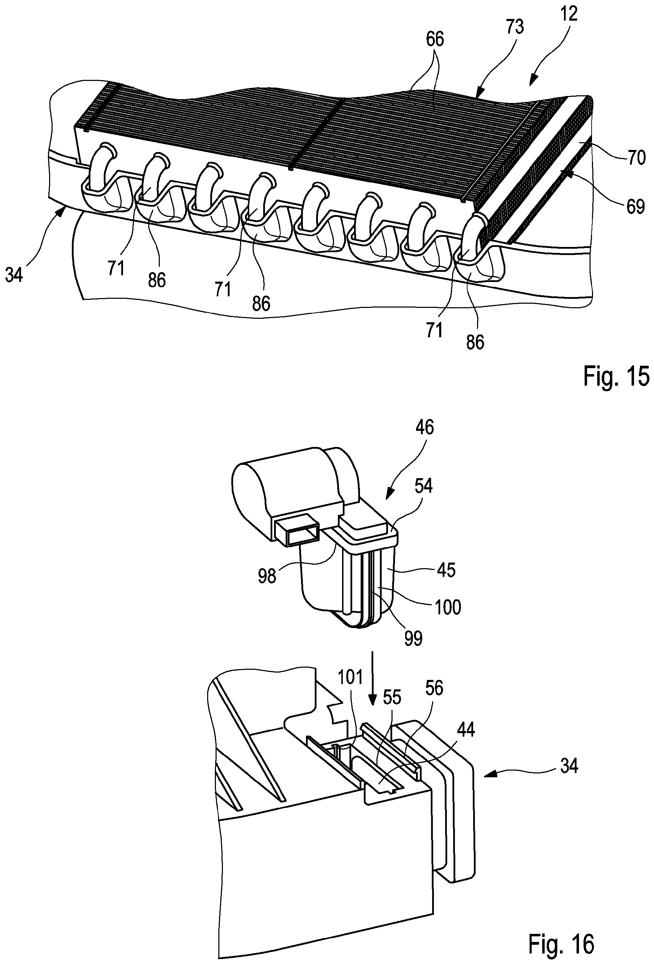

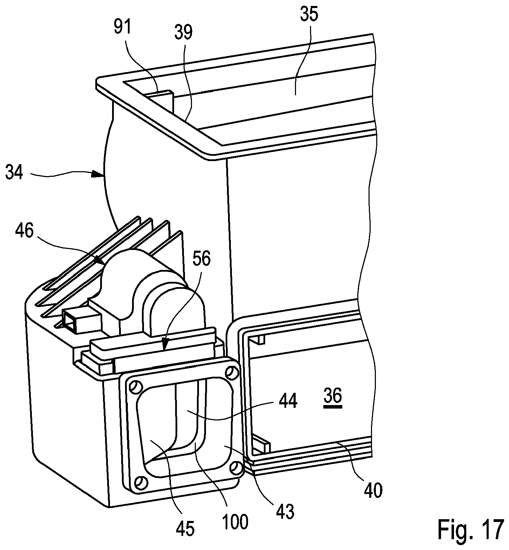

Wie sich den Figuren 3, 16 und 17 entnehmen lässt, kann die Drosseleinrichtung 46 zweckmäßig eine vormontierbare Einheit sein, die an das Gehäuse 34 so angebaut werden kann, dass dabei das Drosselorgan 45 in den Drosselraum 44 eingesetzt wird. Zweckmäßig besitzt die Drosseleinrichtung 46 einen Verschlussabschnitt 54. Für das Einsetzen des Drosselorgans 45 weist das Gehäuse 34 eine Drosselraumöffnung 55 auf, durch die das Drosselorgan 45 in den Drosselraum 44 einsetzbar ist. Der Verschlussabschnitt 54 verschließt diese Drosselraumöffnung 55 in montiertem Zustand. Zweckmäßig kann zum Festlegen der Drosseleinrichtung 46 am Gehäuse 34 eine Clipsverbindung 56 vorgesehen sein. Im Beispiel umfasst die Clipsverbindung 56 gehäuseseitige Rastelemente, die den Verschlussabschnitt 54 hintergreifen. An einer der Drosselraumöffnung 55 zugewandten Seite kann gemäß Fig. 16 am Verschlussabschnitt 54 zweckmäßig eine Axialdichtung 98 angeordnet sein, die sich im Einbauzustand dichtend entlang des Öffnungsrands der Drosselraumöffnung 55 am Gehäuse 34 anlegt. Außerdem kann eine weitere Dichtung 99 an einer Außenseite eines Rahmens 100 angeordnet sein, die im Einbauzustand in eine Führungsnut 101 eingreift, die an einer dem Drosselraum 44 ausgesetzten Innenseite des Gehäuses 34 ausgebildet ist. Der Rahmen 100 umschließt das als Klappe, insbesondere als Schmetterlingsklappe, ausgestaltete Drosselorgan 45, um die dafür benötigte Dichtkontur an der Drosseleinrichtung 46 selbst bereitzustellen, wodurch eine hocheffiziente und relativ genau dosierbare Drosselung realisierbar ist.

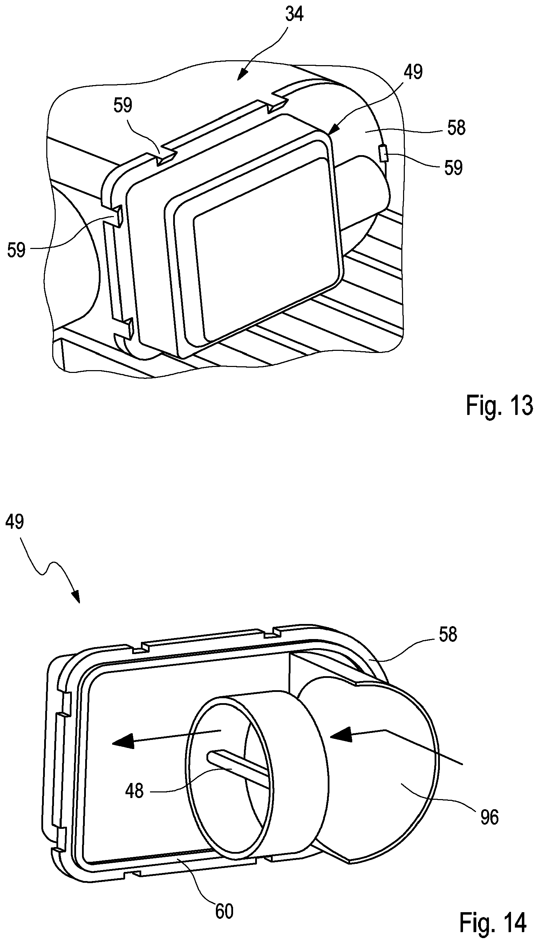

Gemäß den Figuren 3, 13 und 14 bildet der Luftmassensensor 49 vorzugsweise eine vormontierbare Einheit, die so an das Gehäuse 34 angebaut werden kann, dass dabei die Sensorik 48 in den Sensorraum 47 eingesetzt wird. Um die Sensorik 48 in den Sensorraum 47 einsetzen zu können, ist am Gehäuse 34 eine Sensorraumöffnung 57 vorgesehen. Der Luftmassensensor 49 weist einen Verschlussabschnitt 58 auf, der komplementär zur Sensorraumöffnung 57 geformt ist, so dass durch die Montage des Luftmassensensors 49 automatisch die Sensorraumöffnung 57 verschlossen wird. Auch hier kann gemäß Figur 13 eine Clipsverbindung 59 vorgesehen sein, um den Luftmassensensor 49 einfach am Gehäuse 34 fixieren zu können. Im Beispiel umfasst die Clipsverbindung 59 mehrere gehäuseseitige Rastarme, die im montierten Zustand den Verschlussabschnitt 58 übergreifen.

Gemäß Figur 14 kann an einer dem Gehäuse 34 zugewandten Innenseite des Verschlussabschnitts 58 eine Dichtung 60 angeordnet sein, um ein gasdichtes Verschließen der Sensorraumöffnung 57 mit Hilfe des Verschlusselements 58 zu vereinfachen. Eine entsprechende Dichtung kann auch an der dem Gehäuse 34 zugewandten Innenseite des Verschlussabschnitts 54 der Drosseleinrichtung 46 angeordnet sein. In Fig. 14 ist außerdem eine am Luftmassensensor 49 ausgebildete Führungskontur 96 erkennbar, die beim Montieren des Luftmassensensors 49 in den Sensorraum 47 eindringt und darin so positioniert wird, dass sich darin die gewünschte Strömungslenkung bzw. Strömungsführung ergibt. Im Beispiel wird mittels der Führungskontur 96 im Sensorraum 47 eine Strömungsumlenkung um etwa 90° bei vergleichsweise geringem Strömungswiderstand erreicht.

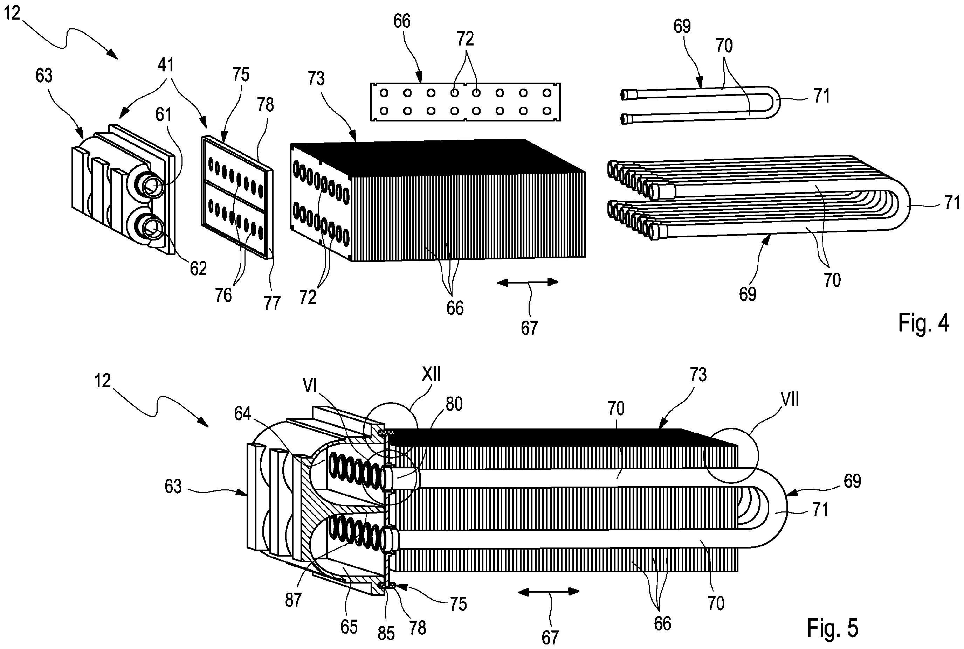

Nachfolgend wird anhand der Figuren 4-12 und 15 eine bevorzugte Ausführungsform des Ladeluftkühlers 12 mit Varianten näher erläutert.

Der Ladeluftkühler 12 besitzt einen Abdeckkörper 41, der im montierten Zustand die Kühlerraumöffnung 40 dicht verschließt. Dieser Abdeckkörper 41 weist dabei einen Kühlmitteleinlass 61 und einen Kühlmittelauslass 62 auf. Somit befinden sich Kühlmitteleinlass 61 und Kühlmittelauslass 62 an einer Außenseite des Gehäuses 34. Kühlmitteleinlass 61 und Kühlmittelauslass 62 sind innerhalb des Ladeluftkühlers 12 durch einen Kühlmittelpfad miteinander verbunden. Über die Anschlüsse 61, 62 ist der Ladeluftkühler 12 in den Ladeluftkühlkreis 15 einbindbar.

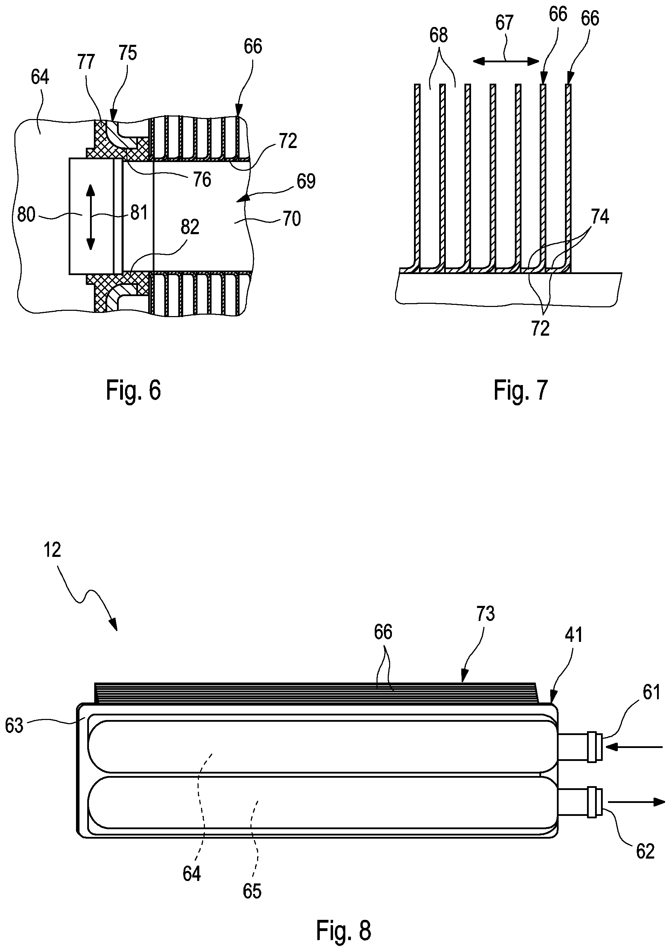

Grundsätzlich kann der Abdeckkörper 41 bei einer nicht gezeigten Ausführungsform als einfache Abdeckplatte ausgestaltet sein, die in ihrem Inneren keine Strömungsführungsfunktion besitzt. Bevorzugt ist jedoch die hier gezeigte Ausführungsform, bei welcher der Abdeckkörper 41 einen Verteiler- und Sammelkasten 63 aufweist oder als solcher ausgestaltet ist. Gemäß den Figuren 5 und 8 kann dieser Verteiler- und Sammelkasten 63 somit insbesondere eine Verteilerkammer 64, die mit dem Kühlmitteleinlass 61 fluidisch verbunden ist, und eine Sammelkammer 65 aufweisen, die mit dem Kühlmittelauslass 62 fluidisch verbunden ist.

Gemäß den Figuren 4-7 umfasst der Ladeluftkühler 12 eine Vielzahl von Platten 66, die in einer Stapelrichtung 67 aufeinander gestapelt sind. Gemäß Figur 7 ist zwischen einzelnen Platten 66, die in der Stapelrichtung 67 zueinander benachbart sind, jeweils ein Zwischenraum 68 ausgebildet. Diese Zwischenräume 68 bilden einen Teil des Ladeluftpfads, der innerhalb des Gehäuses 34 durch den Ladeluftkühler 12 führt.

Der Ladeluftkühler 12 weist außerdem mehrere U-förmige Rohre 69 auf, die jeweils zwei geradlinige Abschnitte 70 und ein Bogenstück 71 aufweisen, wobei das jeweilige Bogenstück 71 die beiden zugehörigen geradlinigen Abschnitte 70 fluidisch miteinander verbindet. Ferner erstrecken sich die geradlinigen Abschnitte 70 zweckmäßig parallel zueinander, so dass das Bogenstück 71 einen 180°-Bogen bildet. Die geradlinigen Abschnitte 70 sind durch Durchbrüche 72 hindurchgesteckt, die in den Platten 66 ausgebildet sind. Bei benachbarten Platten 66 sind diese durch Brüche 72 in der Stapelrichtung 67 zueinander fluchtend angeordnet. Die aufeinander gestapelten Platten 66 bilden einen Plattenstapel 73. Während die geradlinigen Abschnitte 70 der Rohre 69 somit weitgehend innerhalb des Plattenstapels 73 verlaufen, erstrecken sich die Bogenstücke 71 außerhalb des Stapels 73. Die Durchbrüche 72 können gemäß den Figuren 6 und 7 jeweils einen Umlauf 74 aufweisen. Eine in der Stapelrichtung 67 gemessene Höhe der Umläufe 74 definiert den in der Stapelrichtung 67 gemessenen Abstand benachbarter Platten 66. Gleichzeitig vereinfachen die Umläufe 74 die Montage des Ladeluftkühlers 12.

In Figur 4 sind rein exemplarisch neben dem Plattenstapel 73 eine einzelne Platte 66 und neben der Anordnung der Rohre 69 ein einzelnes Rohr 69 dargestellt.

Besonders vorteilhaft ist eine Ausführungsform, bei welcher die Platten 66 bezüglich der Rohre 69 lose angeordnet sind, so dass also insbesondere keine Lötverbindungen zwischen den Platten 66 und den Rohren 69 vorhanden sind. Zu diesem Zweck können die Umläufe 74 jeweils einen Schiebesitz oder Presssitz definieren.

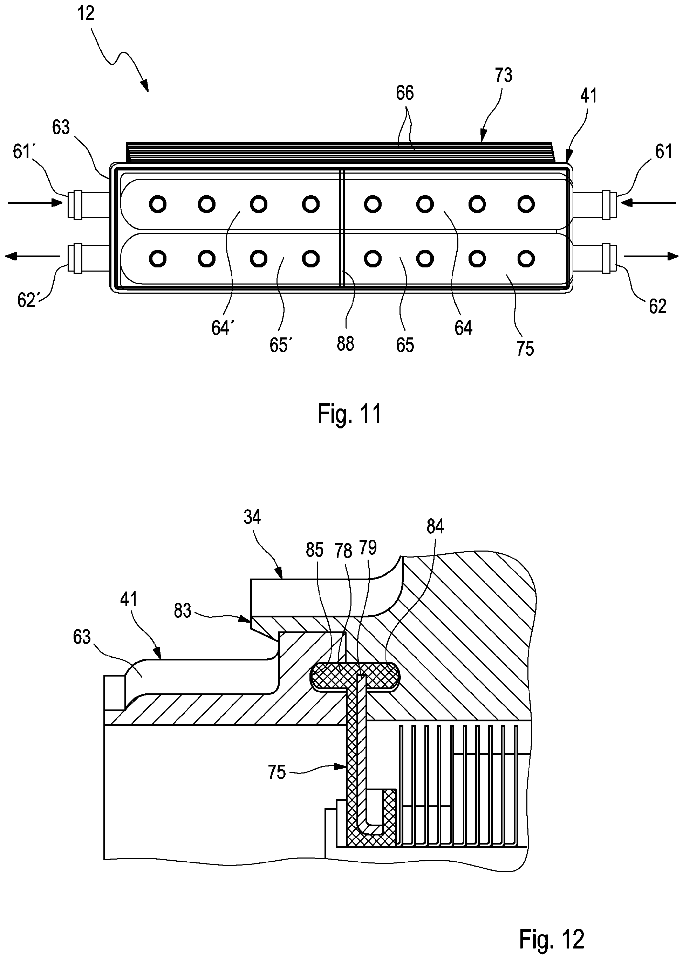

Der Abdeckkörper 41 besitzt bei den hier gezeigten Ausführungsformen eine Halteplatte 75, die den Verteiler- und Sammelkasten 63 zum Stapel 73 hin verschließt und die eine Vielzahl von Öffnungen 76 enthält. Durch diese Öffnungen 76 sind die freien Enden oder Endabschnitte 80 der geraden Abschnitte 70 der Rohre 69 hindurch gesteckt. Die Halteplatte 75 ist zweckmäßig mit einem Elastomer 77 beschichtet. Diese Elastomerbeschichtung, die im Folgenden ebenfalls mit 77 bezeichnet wird, ist zweckmäßig so realisiert, dass sie an einer den Kammern 64, 65 des Verteiler- und Sammelkastens 63 zugewandten Seite die Halteplatte 75 vollständig bedeckt. Außerdem ist die Elastomerbeschichtung 77 hier zusätzlich so gestaltet, dass sie die Öffnungen 76 gemäß Figur 6 durchsetzt und hintergreift. Schließlich ist gemäß Figur 12 vorgesehen, dass die Elastomerbeschichtung 77 an der Halteplatte 75 eine umlaufende Gehäusedichtung 78 ausformt, welche einen umlaufenden Außenrand 79 der Halteplatte 75 in der Umfangsrichtung geschlossen umgibt und dabei den Rand 79 außerdem beidseitig übergreift. Die dem Stapel 73 zugewandte Seite der Halteplatte 75 ist im Beispiel weitgehend unbeschichtet.

Gemäß Figur 6 sind die Rohre 69 bzw. deren geradlinige Abschnitte 70 in den Öffnungen 76 mit der Elastomerbeschichtung 77 in Kontakt, wodurch eine ausreichende Abdichtung realisiert werden kann. Zusätzlich kann zur Verbesserung der Dichtung sowie zur Fixierung der Halteplatte 75 am Stapel 73 vorgesehen sein, die in die Halteplatte 75 eingesteckten Enden 80 der Rohre 69 gemäß einem Doppelpfeil 81 hinsichtlich ihres Querschnitts mechanisch aufzuweiten. Hierdurch kann eine Fixierung der Rohre 69 an der Halteplatte 75 realisiert werden, wodurch der gesamte Stapel 73 bezüglich der Halteplatte 75 stabilisiert wird. Bemerkenswert ist dabei, dass es zur Stabilisierung des Stapels 73 somit keine Lötverbindung benötigt. Gleichzeitig verbessert die Verpressung der Rohrenden 80 in den Öffnungen 76 der Halteplatte 75 die Abdichtung der Elastomerschicht 77.

Die Elastomerschicht 77 bildet an der Halteplatte 75 somit für jede Öffnung 76 eine Rohrdichtung 82, die den jeweiligen durchgesteckten Endabschnitt 80 des jeweiligen Rohrs 69 gegenüber der Halteplatte 75 abdichtet. Ferner bildet die Elastomerschicht 77 die Gehäusedichtung 78, die im montierten Zustand den Verteiler- und Sammelkasten 64 bzw. den gesamten Abdeckkörper 41 gegenüber dem Gehäuse 34 abdichtet. Die Gehäusedichtung 78 greift dabei axial jeweils in eine gehäuseseitige Nut 84 und eine kastenseitige Nut 85 ein. Außerdem dichtet die Elastomerschicht 77 gemäß Fig. 5 in Verbindung mit einer Trennwand 87 des Verteiler- und Sammelkastens 63 den einlassseitigen Verteilerraum 64 des Verteiler- und Sammelkastens 63 gegenüber dem auslassseitigen Sammelraum 65 des Verteiler- und Sammelkastens 63.

Der Abdeckkörper 41 kann gemäß Figur 12 mittels einer Clipsverbindung 83 am Gehäuse 34 befestigt sein. Im hier gezeigten Beispiel sind mehrere gehäuseseitige Clipselemente vorgesehen, die einen umlaufenden Rand des Abdeckkörpers 41 hintergreifen, der hier am Verteiler- und Sammelkasten 63 ausgeformt ist.

Gemäß Figur 15 kann das Gehäuse 34 an einer der Kühlerraumöffnung 40 gegenüberliegenden Seite für jedes Bogenstück 71 jeweils eine separate Aufnahmetasche 86 aufweisen, die zum Inneren des Gehäuses 34 offen ist und in die das jeweilige Bogenstück 71 hineinragt. Hierdurch ergibt sich für den Ladeluftkühler 12 über die Rohre 69 eine effiziente Lagefixierung im Gehäuse 34.

Mit Bezug auf die Figuren 8-11 sollen nachfolgend vier Varianten für den Ladeluftkühler 12 näher erläutert werden, wobei hauptsächlich auf die Kühlmittelführung in Verteiler- und Sammelkasten 63 eingegangen wird.

Figur 8 zeigt die hier näher vorgestellte einfache Ausführungsform, bei welcher im Verteiler- und Sammelkasten 63 ein einziger Verteilerraum 64 und ein einziger Sammelraum 65 ausgebildet sind. Diese sind gemäß Figur 5 durch eine integral am Kasten 63 ausgeformte Trennwand 87 voneinander getrennt, die im eingebauten Zustand stirnseitig an der Elastomerschicht 77 zur Anlage kommt.

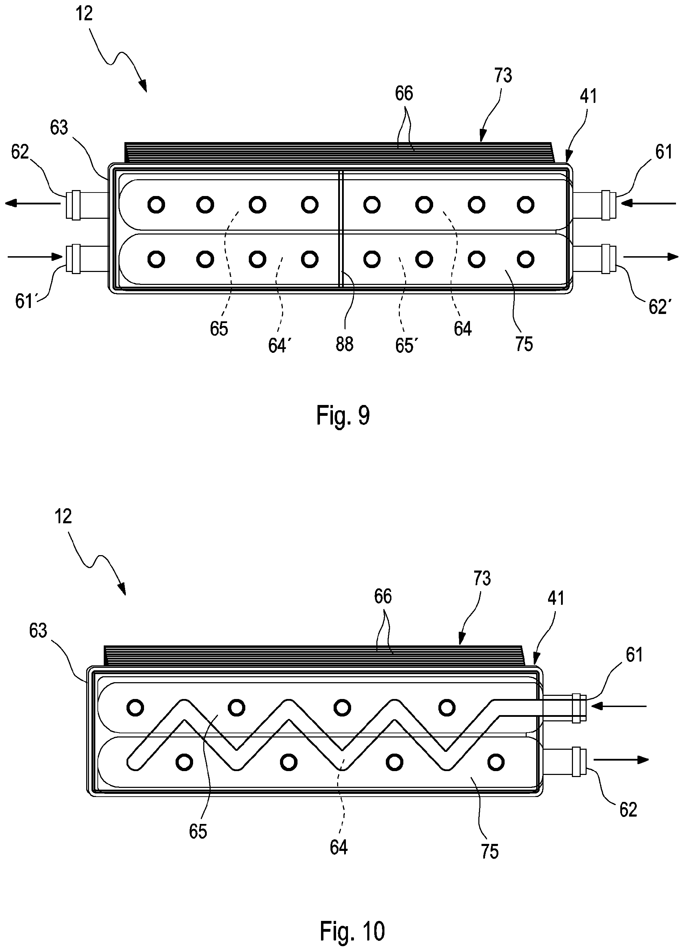

Die Figuren 9-11 zeigen nun drei verschiedene Varianten zu der in Figur 8 gezeigten Ausführungsform, wobei zum vereinfachten Verständnis der Verteiler- und Sammelkasten 63 transparent dargestellt ist. Figur 9 zeigt eine Ausführungsform, bei welcher im Kasten 63 eine weitere Trennwand 88 angeordnet ist, wodurch die zwei Kammern 64, 65 der in Figur 8 gezeigten Ausführungsform in insgesamt vier Kammern unterteilt werden, so dass folglich eine erste Einlasskammer 64 und eine zweite Einlasskammer 64' vorhanden sind, die mit zwei Kühlmitteleinlässen 61, 61' fluidisch verbunden sind. Dementsprechend sind auch zwei Auslasskammern 65 bzw. 65' vorgesehen, die mit zwei Kühlmittelauslässen 62, 62' verbunden sind. Hierdurch lässt sich insbesondere ein zweiflutiger Niedertemperatur-Kühler realisieren.

Bei der in Figur 10 gezeigten Ausführungsform ist im Kasten 63 die Einlasskammer 64 mit einer Zick-Zack-Kontur versehen, um unterschiedliche Rohre 69 über unterschiedliche Abschnitte miteinander zu verbinden. Die Einlasskammer 65 verbindet dann die übrigen Rohrabschnitte komplementär dazu miteinander. Durch diese Anordnung kann eine vergleichsweise homogene Temperaturverteilung innerhalb des Ladeluftkühlers 12 realisiert werden.

Bei der in Figur 11 gezeigten Ausführungsform sind im Kasten 63 wieder vier Kammern ausgebildet, jedoch anders verschaltet als in Figur 9, wodurch es möglich ist, im Ladeluftkühler 12 einen beispielsweise in der linken Hälfte ausgebildeten Niedertemperaturkreis und einen beispielsweise in der rechten Hälfte ausgebildeten Hochtemperaturkreis zu realisieren.

## Patentansprüche

1. Frischluftversorgungseinrichtung für eine Brennkraftmaschine (1), insbesondere eines Kraftfahrzeugs,
- mit einem Filterelement (37), das in einem Filterraum (35) angeordnet ist,
- mit einem Ladeluftkühler (12), der in einem Kühlerraum (36) angeordnet ist,
- mit einem einstückigen Gehäuse (34), das integral den Filterraum (35) und den Kühlerraum (36) aufweist,
- mit einer Drosseleinrichtung (46), deren Drosselorgan (45) in einem Drosselraum (44) angeordnet ist, der integral im oder am Gehäuse (34) ausgeformt ist, und/oder mit einem Luftmassensensor (49), dessen Sensorik (48) in einem Sensorraum (47) angeordnet ist, der integral im oder am Gehäuse (34) ausgeformt ist,
- wobei der Ladeluftkühler (12) einen Kühlmitteleinlass (61), einen Kühlmittelauslass (62) und einen den Kühlmitteleinlass (61) mit dem Kühlmittelauslass (62) verbindenden, internen Kühlmittelpfad aufweist, der mit einem im Gehäuse (34) verlaufenden Ladeluftpfad wärmeübertragend gekoppelt ist, der durch den Kühlerraum (36) hindurchführt,
**dadurch gekennzeichnet,**
**dass** die Drosseleinrichtung (46) einen Verschlussabschnitt (54) aufweist, der eine am Gehäuse (34) vorgesehene Drosselraumöffnung (55) verschließt, durch die das Drosselorgan (45) in den Drosselraum (44) eingesetzt ist, und/oder dass der Luftmassensensor (49) einen Verschlussabschnitt (58) aufweist, der eine am Gehäuse (34) vorgesehene Sensorraumöffnung (57) verschließt, durch die die Sensorik (48) in den Sensorraum (47) eingesetzt ist.

2. Einrichtung nach Anspruch 1,
**dadurch gekennzeichnet,**
**dass** der Ladeluftkühler (12) als in den Kühlerraum (36) einsetzbares, insbesondere einschiebbares, Bauteil ausgebildet ist.

3. Einrichtung nach Anspruch 1 oder 2,
**dadurch gekennzeichnet,**
**dass** der Ladeluftkühler (12) einen Abdeckkörper (41) aufweist, der den Kühlmitteleinlass (61) und den Kühlmittelauslass (62) aufweist und der eine am Gehäuse (34) vorgesehene Kühlerraumöffnung (40) verschließt, durch die der Ladeluftkühler (12) in den Kühlerraum (36) eingesetzt ist.

4. Einrichtung nach einem der vorhergehenden Ansprüche,
**dadurch gekennzeichnet,**
**dass** die Drosseleinrichtung (46) eine vormontierbare Einheit ist, die an das Gehäuse (34) so angebaut ist, dass das Drosselorgan (45) in den Drosselraum (44) eingesetzt ist.

5. Einrichtung nach einem der vorhergehenden Ansprüche,
**dadurch gekennzeichnet,**
**dass** der Verschlussabschnitt (54) mit dem Gehäuse (34) verclipst ist.

6. Einrichtung nach einem der vorhergehenden Ansprüche,
**dadurch gekennzeichnet,**
**dass** der Luftmassensensor (49) eine vormontierbare Einheit ist, die an das Gehäuse (34) so angebaut ist, dass die Sensorik (48) in den Sensorraum (47) eingesetzt ist.

7. Einrichtung nach einem der einem der vorhergehenden Ansprüche,
**dadurch gekennzeichnet,**
**dass** der Verschlussabschnitt (58) mit dem Gehäuse (34) verclipst ist.

8. Einrichtung nach einem der einem der vorhergehenden Ansprüche,
**dadurch gekennzeichnet,**
**dass** integral am Gehäuse (34) ein Auslassstutzen (50) ausgeformt ist, an den ein Verdichter (7) eines Abgasturboladers (6) einlassseitig anschließbar ist.

9. Einrichtung nach einem der vorhergehenden Ansprüche,
**dadurch gekennzeichnet,**
**dass** integral am Gehäuse (34) ein Einlassstutzen (53) ausgeformt ist, an den ein Verdichter (7) eines Abgasturboladers (6) auslassseitig anschließbar ist.

10. Einrichtung zumindest nach Anspruch 2,
**dadurch gekennzeichnet,**
**dass** der Abdeckkörper (41) als Verteiler- und Sammelkasten (63) ausgestaltet ist oder einen solchen aufweist.

11. Einrichtung nach einem der vorhergehenden Ansprüche,
**dadurch gekennzeichnet,**
- **dass** der Ladeluftkühler (12) eine Vielzahl von Platten (66) aufweist, die in einer Stapelrichtung (67) aufeinander gestapelt sind und in der Stapelrichtung (67) zueinander beabstandet sind, wobei Zwischenräume (68) benachbarter Platten (66) einen Teil des Ladeluftpfads bilden,
- **dass** der Ladeluftkühler (12) mehrere U-förmige Rohre (69) aufweist, deren geradlinige Abschnitte (70) durch Durchbrüche (72) der Platten (66) hindurch gesteckt sind, die in der Stapelrichtung (67) zueinander fluchten, während Bogenstücke (71) der Rohre (69), die je zwei geradlinige Abschnitte (70) miteinander verbinden, außerhalb des Stapels (73) verlaufen,
- **dass** die Platten (66) bezüglich der Rohre (69) lose angeordnet sind.

12. Einrichtung nach Anspruch 11,
**dadurch gekennzeichnet,**
- **dass** die geraden Abschnitte (70) der Rohre (69) durch Öffnungen (76) einer Halteplatte (75) hindurch gesteckt sind, die in der Stapelrichtung (67) an den Stapel (73) angrenzt und die mit einem Elastomer (77) beschichtet ist,
- **dass** die Halteplatte (75) eine Gehäusedichtung (78) aufweist, die einen als Verteiler- und Sammelkasten (63) ausgestalteten Abdeckkörper (41) des Ladeluftkühlers (12) gegenüber dem Gehäuse (34) abdichtet, wobei der Abdeckkörper (41) den Kühlmitteleinlass (61) und den Kühlmittelauslass (62) aufweist,
- **dass** die Halteplatte (75) für jede ihrer Öffnungen (76) eine Rohrdichtung (82) aufweist, die den jeweiligen durchgesteckten Abschnitt (80) des jeweiligen Rohrs (69) gegenüber der Halteplatte (75) abdichtet.

13. Einrichtung nach Anspruch 12,
**dadurch gekennzeichnet,**
- **dass** die Abschnitte (80) der Rohre (69) im Bereich der Halteplatte (75) nachträglich mechanisch aufgeweitet sind,
- **dass** das Gehäuse (34) für jeden Bogenabschnitt (71) eine separate Aufnahmetasche (86) aufweist, in die der jeweilige Bogenabschnitt (71) hineinragt,
- **dass** der Abdeckkörper (41) mit dem Gehäuse (34) verclipst ist.

14. Einrichtung nach einem der einem der vorhergehenden Ansprüche, **dadurch gekennzeichnet,**
- **dass** das Filterelement (37) wenigstens ein Positionierelement (90) aufweist, das mit einer am Gehäuse (34) im Filterraum (35) angeordneten Positionierkontur (91) zum Positionieren und/oder Halten des Filterelements (37) in einer vorbestimmten Relativlage zum Gehäuse (34) zusammenwirkt,
- **dass** das Filterelement (37) einen ringförmigen Filterkörper (92) sowie zwei Endscheiben (93, 94) aufweist, die an axialen Stirnseiten des Filterkörpers (92) angeordnet sind, wobei das jeweilige Positionierelement (90) an einer solchen Endscheibe (93, 94) angeordnet ist.

## Claims

1. A fresh air supply device for an internal combustion engine (1), in particular in a motor vehicle,
- with a filter element (37) which is arranged in a filter compartment (35),
- with a charge-air cooler (12), which is arranged in a cooler compartment (36),
- with a one-piece housing (34) that integrally comprises the filter compartment (35) and the cooler compartment (36),
- with a throttle device (46), the throttle member (45) of which is arranged in a throttle compartment (44) which is formed integrally in or on the housing (34), and/or with an air mass sensor (49), the sensor system (48) of which is arranged in a sensor compartment (47) which is formed integrally in or on the housing (34),
- wherein the charge-air cooler (12) has a coolant inlet (61), a coolant outlet (62) and an internal coolant path which connects the coolant inlet (61) to the coolant outlet (62), and is coupled in a heat-transferring manner to a charge-air path extending inside the housing (34) and through the cooler compartment (36),
**characterized in that**,
the throttle device (46) has a closure section (54), which closes a throttle compartment opening (55) provided on the housing (34), through which the throttle member (45) is inserted into the throttle compartment (44), and/or the air mass sensor (49) has a closure section (58) which closes a sensor compartment opening (57) provided on the housing (34), through which the sensor system (48) is inserted into the sensor compartment (47).

2. The device according to Claim 1,
**characterized in that**
the charge-air cooler (12) is constructed as a component which is able to be inserted, in particular able to be pushed into the cooler compartment (36).

3. The device according to Claim 1 or 2,
**characterized in that**
the charge-air cooler (12) has a cover body (41) which has the coolant inlet (61) and the coolant outlet (62) and which closes a cooler compartment opening (40) provided on the housing (34), through which the charge-air cooler (12) is inserted into the cooler compartment (36).

4. The device according to any one of the preceding Claims,
**characterized in that**
the throttle device (46) is a unit which is able to be preassembled, which is added onto the housing (34) so that the throttle member (45) is inserted into the throttle compartment (44).

5. The device according to any one of the preceding Claims,
**characterized in that**
the closure section (54) is connected by a clip connection with the housing (34).

6. The device according to any one of the preceding Claims,
**characterized in that**
the air mass sensor (49) is a unit which is able to be preassembled, which is added onto the housing (34) so that the sensor system (48) is inserted into the sensor compartment (47).

7. The device according to any one of the preceding Claims,
**characterized in that**
the closure section (58) is connected by a clip connection with the housing (34).

8. The device according to any one of the preceding Claims,
**characterized in that**
an outlet connection piece (50) is formed integrally on the housing (34), to which connection piece a supercharger (7) of an exhaust gas turbocharger (6) is able to be connected on the inlet side.

9. The device according to any one of the preceding Claims,
**characterized in that**
an inlet connection piece (53) is formed integrally on the housing (34), to which connection piece a supercharger (7) of an exhaust gas turbocharger (6) is able to be connected on the outlet side.

10. The device at least according to Claim 2,
**characterized in that**
the cover body (41) is configured as a distributor- and collection box (63) or has one such.

11. The device according to any one of the preceding Claims,
**characterized in that**
- the charge-air cooler (12) has a plurality of plates (66), which are stacked onto one another in a stacking direction (67) and are spaced apart from one another in the stacking direction (67), wherein intermediate spaces (68) of adjacent plates (66) form a portion of the charge-air path,
- the charge-air cooler (12) has several U-shaped tubes (69), the rectilinear sections (70) of which are inserted through apertures (72) of the plates (66), which are aligned to one another in the stacking direction (67), whilst curved sections (71) of the tubes (69), which connect in each case two rectilinear sections (70) with one another, run outside the stack (73),
- the plates (66) are arranged loosely with respect to the tubes (69).

12. The device according to Claim 11,
**characterized in that**
- the straight sections (70) of the tubes (69) are inserted through openings (76) of a holding plate (75), which adjoins the stack (73) in the stacking direction (67) and which is coated with an elastomer (77),
- the holding plate (75) has a housing seal (78) which seals a cover body (41) of the charge-air cooler (12), configured as distributor- and collection box (63), with respect to the housing (34), wherein the cover body (41) has the coolant inlet (61) and the coolant outlet (62),
- the holding plate (75) has a tube seal (82) for each of its openings (76), which seals the respective inserted section (80) of the respective tube (69) with respect to the holding plate (75).

13. The device according to Claim 12,
**characterized in that**
- the sections (80) of the tubes (69) are subsequently widened mechanically in the region of the holding plate (75),
- the housing (34) has a separate receiving pocket (86) for each curved section (71), into which the respective curved section (71) projects,
- the cover body (41) is connected by a clip connection with the housing (34).

14. The device according to any one of the preceding Claims,
**characterized in that**
- the filter element (37) has at least one positioning element (90) which cooperates with a positioning contour (91), arranged on the housing (34) in the filter compartment (35), for positioning and/or holding the filter element (37) in a predetermined relative position to the housing (34),
- the filter element (37) has an annular filter body (92) and two end plates (93, 94), which are arranged on axial front faces of the filter body (92), wherein the respective positioning element (90) is arranged on such an end plate (93, 94).

## Revendications

1. Dispositif d'apport d'air frais pour un moteur à combustion interne (1), en particulier d'un véhicule automobile, comprenant :
- un élément filtrant (37) qui est agencé dans un espace de filtre (35);
- un refroidisseur d'air à suralimentation (12) qui est agencé dans un espace de refroidisseur (36),
- un boîtier d'un seul tenant (34), qui présente de manière intégrée l'espace de filtre (35) et l'espace de refroidisseur (36),
- un dispositif d'étranglement (46) dont l'organe d'étranglement (45) est agencé dans un espace d'étranglement (44), qui est formé de manière intégrée dans ou sur le boîtier (34) et/ou un capteur de masse d'air (49), dont les capteurs (48) sont agencés dans un espace de capteur (47) qui est formé de manière intégrée dans ou sur le boîtier (34),
- dans lequel le refroidisseur d'air à suralimentation (12) présente une entrée d'agent de refroidissement (61), une sortie d'agent de refroidissement (62) et un trajet d'agent de refroidissement interne raccordant l'entrée d'agent de refroidissement (61) à la sortie d'agent de refroidissement (62), lequel trajet est couplé de manière à transmettre la chaleur à un trajet d'air à suralimentation s'étendant dans le boîtier (34), lequel trajet est traversé par l'espace de refroidisseur (36),
**caractérisé en ce que** :
le dispositif d'étranglement (46) présente une section de fermeture (54) qui ferme une ouverture d'espace d'étranglement (55) ménagée sur le boîtier (34), par laquelle l'organe d'étranglement (45) est inséré dans l'espace d'étranglement (44) et/ou le capteur de masse d'air (49) présente une section de fermeture (58) qui ferme une ouverture d'espace de capteur (57) ménagée sur le boîtier (34), à travers laquelle les capteurs (48) sont insérés dans l'espace de capteur (47).

2. Dispositif selon la revendication 1,
**caractérisé en ce que**
le refroidisseur d'air à suralimentation (12) est conformé en composant insérable, en particulier emboîtable dans l'espace de refroidissement (36).

3. Dispositif selon la revendication 1 ou 2,
**caractérisé en ce que**
le refroidisseur d'air à suralimentation (12) présente un corps couvrant (41) qui présente l'entrée d'agent de refroidissement (61) et la sortie d'agent de refroidissement (62) et qui ferme une ouverture d'espace de refroidisseur (40) ménagée sur le boîtier (34), à travers laquelle le refroidisseur d'air à suralimentation (12) est inséré dans l'espace de refroidisseur (36).

4. Dispositif selon l'une quelconque des revendications précédentes,
**caractérisé en ce que**
le dispositif d'étranglement (46) est une unité pré-montable qui est assemblée sur le boîtier (34) de sorte que l'organe d'étranglement (45) soit inséré dans l'espace d'étranglement (44).

5. Dispositif selon l'une quelconque des revendications précédentes,
**caractérisé en ce que**
la section de fermeture (54) est clipsée avec le boîtier (34).

6. Dispositif selon l'une quelconque des revendications précédentes,
**caractérisé en ce que**
le capteur de masse d'air (49) est une unité pré-montable qui est assemblée sur le boîtier (34) de sorte que les capteurs (48) soient insérés dans l'espace de capteur (47).

7. Dispositif selon l'une quelconque des revendications précédentes,
**caractérisé en ce que**
la section de fermeture (58) est clipsée avec le boîtier (34).

8. Dispositif selon l'une quelconque des revendications précédentes,
**caractérisé en ce que**
il est formé de manière intégrée sur le boîtier (34) une tubulure de sortie (50) sur laquelle peut être raccordé un compresseur (7) d'un turbocompresseur à gaz d'échappement (6) côté entrée.

9. Dispositif selon l'une quelconque des revendications précédentes,
**caractérisé en ce que** :
il est formé de manière intégrée sur le boîtier (34) une tubulure d'entrée (53) sur laquelle peut être raccordé un compresseur (7) d'un turbocompresseur à gaz d'échappement (6) côté sortie.

10. Dispositif au moins selon la revendication 2,
**caractérisé en ce que**
le corps couvrant (41) se présente sous la forme d'une caisse de distribution et de collecte (63) ou présente une telle caisse.

11. Dispositif au moins selon l'une quelconque des revendications précédentes,
**caractérisé en ce que**
- le refroidisseur d'air à suralimentation (12) présente une pluralité de plaques (66) qui sont empilées dans une direction d'empilage (67) l'une au-dessus de l'autre et sont espacées l'une de l'autre dans la direction d'empilage (67), dans lequel des espaces intermédiaires (68) de plaques voisines (66) forment une partie du trajet d'air à suralimentation,
- le refroidisseur d'air à suralimentation (12) présente plusieurs tubes en forme de U (69) dont les sections droites (70) sont enfichées à travers des découpes (72) des plaques (66) qui s'alignent l'une l'autre dans la direction d'empilage (67), tandis que des parties cintrées (71) des tubes (69), qui relient respectivement deux sections droites (70) l'une à l'autre, s'étendent à l'extérieur de la pile (73),
- les plaques (66) sont agencées détachées par rapport aux tubes (69).

12. Dispositif selon la revendication 11,
**caractérisé en ce que**
- les sections droites (70) des tubes (69) sont enfichées à travers des ouvertures (76) d'une plaque de retenue (75), qui est contiguë de la pile (73) dans la direction d'empilage (67) et est revêtue d'un élastomère (77),
- la plaque de retenue (75) présente un joint de boîtier (78) qui étanche un corps couvrant (41) du refroidisseur d'air à suralimentation (12) élaboré en caisse de distribution et de collecte (63) vis-à-vis du boîtier (34), dans lequel le corps couvrant (41) présente l'entrée d'agent de refroidissement (61) et la sortie d'agent de refroidissement (62),
- la plaque de retenue (75) présente pour chacune de ses ouvertures (76) un joint de tube (82) qui étanche la section respective enfichée (80) du tube respectif (69) vis-à-vis de la plaque de retenue (75).

13. Dispositif selon la revendication 12,
**caractérisé en ce que**
- les sections (80) des tubes (69) sont mécaniquement évasées ultérieurement dans la zone de la plaque de retenue (75),
- le boîtier (34) présente pour chaque section cintrée (71) une poche réceptrice séparée (86) dans laquelle entre la section cintrée respective (71),
- le corps couvrant (41) est clipsé avec le boîtier (34).

14. Dispositif au moins selon l'une quelconque des revendications précédentes,
**caractérisé en ce que**
- l'élément filtrant (37) présente au moins un élément de positionnement (90), qui coopère avec un contour de positionnement (91) agencé sur le boîtier (34) dans l'espace de filtre (35) pour positionner et/ou maintenir l'élément filtrant (37) dans une position relative prédéterminée par rapport au boîtier (34),
- l'élément filtrant (37) présente un corps de filtre annulaire (92) ainsi que deux disques d'extrémité (93, 94), qui sont agencés sur les côtés frontaux axiaux du corps de filtre (92), dans lequel l'élément de positionnement respectif (90) est agencé sur un tel disque d'extrémité (93, 94).
